# DEMANDE DE BREVET EUROPEEN

(11) **EP 2 204 293 A1**
(43) Date de publication de la demande: **07.07.2010**
(21) Numéro de dépôt: 09010922.4
(22) Date de dépôt: 26.08.2009
(51) Int. Cl.: B60B 39/02, B60T 8/56

(54) **Dispositif favorisant le glissement d'un vehicule**

(30) Priorité: 28.08.2008 FR 0804740
(71) Demandeur: Dubrulle, Maxime, 27220 Bois Le Roi (FR)
(72) Inventeur: Dubrulle, Maxime, 27220 Bois Le Roi (FR)
(74) Mandataire: Louiset, Raphael

(57) **Abrégé**

Dispositif (10), destiné à être embarqué dans un véhicule, pour favoriser le glissement d'au moins une roue (1) du véhicule par rapport à une chaussée, qui comprend :
- un système (11) de projection d'un lubrifiant sur la roue (1) de sorte à en diminuer le coefficient de frottement par rapport à la chaussée,
- un dispositif (13) d'alimentation en lubrifiant du système (11) de projection.

## Description

De manière générale, l'invention a trait au contrôle du dérapage d'un véhicule. Plus précisément, l'invention se rapporte à un dispositif favorisant le glissement des roues motrices d'un véhicule pour aider à réaliser et à maintenir un positionnement angulaire du véhicule par rapport à sa trajectoire, le véhicule étant lancé à une certaine vitesse.

Il existe une discipline sportive, appelée Drift, dans laquelle un véhicule est positionné en travers de la route tout en avançant, et suivant la trajectoire de la route.

Le Drift est apparu en premier lieu au Japon. Il est généralement admis que son apparition date des années 1970 - 1980, au début en tant que forme de course de rues illégale. Le succès rencontré par les amateurs a conduit, en 1988, au Japon, à une des premières manifestations entièrement consacrées au Drift.

La discipline s'est ensuite étendue au-delà des frontières du Japon. On peut mentionner la compétition de Drift qui a eu lieu aux Etats-Unis en 1996, sur le circuit de Willow Springs, à laquelle des concurrents japonais et américains ont participé. Le Drift est également de plus en plus répandu en Europe, notamment en Grande Bretagne, en Allemagne et en France, et en Australie.

En Drift, un pilote effectue des figures, sur une piste classiquement en bitume, avec un véhicule généralement à propulsion, en contrôlant le glissement des pneus des roues motrices et la direction du véhicule. L'avant du véhicule est dirigé vers un bord de la piste et l'arrière glisse vers le bord opposé, le véhicule se mettant alors à déraper tout en formant un angle avec la trajectoire.

Sur la plupart des véhicules dits « haute performance », notamment utilisés en Drift, les roues arrière sont les roues motrices et les roues avant sont directrices. Le véhicule est lancé sur un circuit avec un vecteur vitesse v, dont l'origine est par exemple prise au centre c d'inertie du véhicule, confondu avec le centre géométrique. Classiquement, ce vecteur vitesse v est tangent à la trajectoire T du véhicule, qui suit la piste, et sensiblement parallèle à la direction D du véhicule.

La direction D du véhicule peut ici être définie comme l'axe parallèle aux roues arrière.

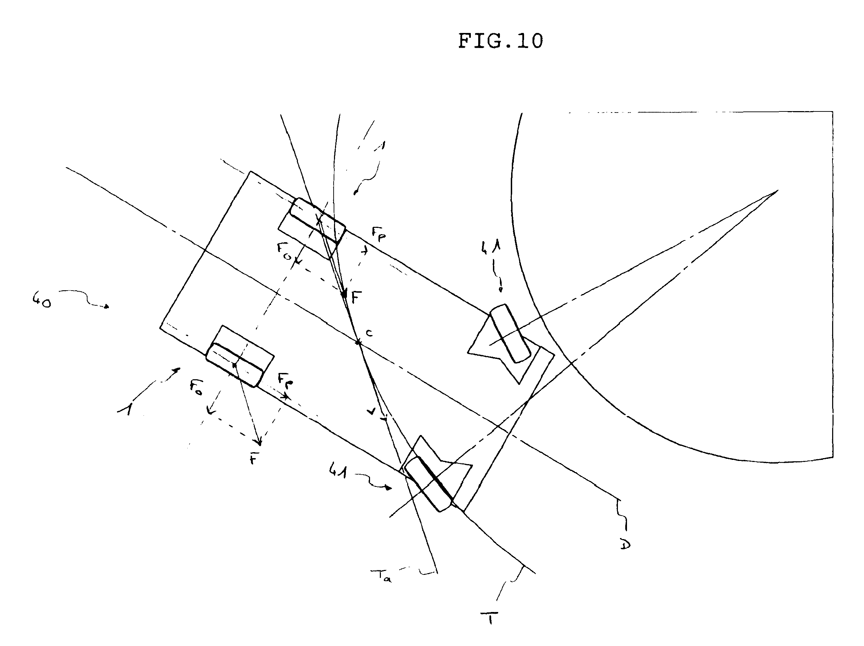

En Drift, au moyen de différentes techniques, le véhicule est positionné de façon à ce que sa direction D forme un angle avec la tangente Ta à la trajectoire T et avance en dérapant, par exemple sur les roues arrière (figure 10).

Les roues avant directrices sont positionnées tangentes à la trajectoire T. Ainsi, les roues arrière sont amenées à avancer dans une direction suivant la trajectoire T, qui ne leur est pas parallèle, et se mettent à glisser fortement. En effet, la force F mise en oeuvre pour déplacer les roues arrière comprend une première composante Fp parallèle à la direction D du véhicule, et donc aux roues arrière, et une deuxième composante Fo orthogonale. La première composante Fp est entrainée par la rotation des roues, tandis que la deuxième Fo est uniquement obtenue par glissement, et est compensée par des forces f de frottements qui tendent à ramener les roues arrière tangentes à la trajectoire T. Cette force f due aux frottements doit alors être vaincue de façon à positionner le véhicule selon la figure à réaliser.

Le pilote doit donc trouver un compromis entre la tenue du positionnement angulaire de la direction D du véhicule par rapport à la trajectoire T pour glisser et les forces f de frottements à vaincre.

Plus l'angle formé par le véhicule et la tangente à la trajectoire est grand, plus la figure de Drift est considérée comme réussie. D'autres facteurs rentrent également en compte dans le jugement des figures de Drift, tels que la vitesse au début et à la fin de la figure ou encore la fumée dégagée par les pneus.

Plus les roues glissent facilement, moins la force de frottement sur les roues arrière est grande, et plus le pilote contrôle facilement le maintien du positionnement de son véhicule. Les techniques permettant de positionner le véhicule de travers sur la piste sont variées.

On peut citer la technique « hand-brake drift » aussi appelée « e-brake » pour emergency brake, dans laquelle le pilote actionne le frein à main, provoquant le freinage des roues arrière. Puis le frein est retiré et le pilote accélère au maximum tout en contre-braquant les roues avant. L'arrière de la voiture est alors lancé vers un bord de la piste tandis que l'avant est dirigé vers l'autre bord.

Des techniques de transfert de poids sont également mises en oeuvre. Dans ces techniques, le poids du véhicule est transféré sur les roues avant, de sorte que les roues arrière ont moins d'adhérence sur la route que les roues avant, ce qui a tendance à provoquer le glissement des roues arrière et une déportation importante de l'arrière de véhicule autour du centre d'inertie du véhicule, ce centre étant transféré vers l'avant. Ce transfert de poids peut être par exemple obtenu par freinage brusque ou en profitant d'un virage.

Bien évidemment, de nombreuses autres techniques peuvent être utilisées, qui dépendent des caractéristiques des composants de la voiture, des pneus, de la nature de la chuassée et du niveau du pilote.

En effet, l'inertie du véhicule est un facteur important en Drift, notamment dans les phases d'accélération et de freinage. Le châssis du véhicule possède de préférence une bonne résistance à la torsion et des renforts frontaux et latéraux sont utilisés afin de rigidifier l'ensemble. En outre, les plaquettes de freins utilisées doivent de préférence se réchauffer et refroidir rapidement afin d'optimiser le rendement à chaque freinage et obtenir à chaque fois un freinage efficace. L'embrayage est également fortement sollicité en Drift, et il sera de préférence sans ressort. La suspension est de préférence haute, mais dépend du pilote.

Les pneus à l'avant du véhicule sont différents de ceux à l'arrière : en général, en Drift, les roues avant sont les roues directrices, et les roues arrière sont celles qui glissent. Ainsi, la gomme des roues arrière, subissant de fortes élévations de température lors des glissements au point d'attacher la route, est de préférence dure afin de fondre moins rapidement, favorisant le glissement, et afin de durer plus longtemps. Les pneus des roues avant seront choisis pour leur haute adhérence à la route. L'âge des pneus influence également les performances.

La durée de vie des pneus arrière varie selon les figures effectuées et selon la nature de la chaussée sur laquelle ils glissent. En général, les pneus arrière ne durent que quelques heures sur un circuit de Drift.

La chaussée est de manière générale recouverte de bitume. Lorsque la chaussée est sèche, l'adhérence des pneus augmente par rapport à une chaussée humide. De plus, les pneus se refroidiront plus lentement sur une chaussée sèche que sur une chaussée humide, diminuant la durée de vie des pneus.

Le contrôle du frottement des pneus sur la chaussée est primordial pour glisser et effectuer une bonne figure de Drift. Il est plus facile de contrôler la position angulaire du véhicule en dérapage si les roues arrière glissent sur une chaussée à faible coefficient de frottement, par exemple sur une chaussée mouillée, que le contraire, afin de diminuer la force due aux frottements. C'est pourquoi il existe des circuits de Drift dans lesquels la piste est préalablement mouillée. Toutefois, dans ce cas, c'est l'ensemble du véhicule qui glisser, ce qui provoque une diminution de son contrôle, en fonction du taux d'humidité de la piste, et ce même hors des figures de Drift. Un pilote, notamment débutant, aura plus de mal à contrôler son véhicule sur une telle chaussée.

En outre, l'adhérence nécessaire varie d'une figure à une autre, des caractéristiques d'une route à une autre, telles que la rugosité du bitume, et d'un véhicule à un autre. En général, les sensations ressenties par le pilote lui permettent de mettre au point une tactique de conduite qui lui est propre sous les conditions rencontrées.

De ce fait, il n'existe pas de pneus de Drift universels qui permettraient d'effectuer toute figure sous toute condition pour tous les pilotes.

L'invention vise notamment à apporter une solution aux divers problèmes mentionnés ci-dessus, en proposant un véhicule équipé d'un dispositif d'aide au glissement permettant de diminuer le coefficient de frottement des pneus selon les sensations ressenties par le pilote.

Un premier objet de l'invention est de proposer un dispositif, destiné à être embarqué dans un véhicule, pour favoriser le glissement d'au moins une roue du véhicule par rapport à une chaussée, qui comprend :
- un système de projection d'un lubrifiant sur la roue de sorte à en diminuer le coefficient de frottement par rapport à la chaussée,
- un dispositif d'alimentation en lubrifiant du système de projection.

Le dispositif permet alors de faciliter le glissement de la roue du véhicule sur la chaussée.

Selon un premier mode de réalisation, le dispositif d'alimentation comprend un réservoir contenant le lubrifiant, et une pompe pour y prélever le lubrifiant et l'envoyer sous pression au système de projection.

Selon un deuxième mode de réalisation, le dispositif d'alimentation comprend plusieurs réservoirs contenant les composants du lubrifiant, et une pompe pour y prélever les composants et les envoyer sous pression au système de projection.

Le lubrifiant est alors constitué lors du mélange des composants. Le lubrifiant obtenu peut être d'une texture, par exemple en mousse, peu pratique à stocker. Dès lors, il est plus facile de stocker ses composants séparément.

Un des réservoirs contient par exemple un tensioactif, tel que du savon, augmentant la mouillabilité du lubrifiant et optimisant ses propriétés.

Selon une réalisation, le dispositif d'alimentation comprend un réservoir de déjaugeage, assurant la fourniture de lubrifiant au système de projection même lorsque le véhicule est dans une position dans laquelle le lubrifiant ne peut être prélevé par la pompe.

Selon une autre réalisation, le dispositif comprend un circuit de vidange du dispositif d'alimentation, afin de pouvoir le vider du lubrifiant pour le nettoyage ou pour changer de lubrifiant.

Selon une autre réalisation, le dispositif d'alimentation comprend un circuit de retour entre le système de projection et le dispositif d'alimentation afin d'ajuster le débit dans le système de projection sans fatiguer le matériel.

Le dispositif peut comporter en outre un mécanisme de réglage du dispositif d'alimentation, permettant d'ajuster les valeurs de débit et de pression du lubrifiant envoyé sur la roue.

Un système de commande du dispositif pour favoriser le glissement permet de déclencher le dispositif à un instant déterminé.

Un second aspect de l'invention est de proposer un véhicule comprenant un train de roues motrices et un train de roues directrices, les roues étant habillées de pneu, le véhicule comportant en outre un dispositif pour favoriser le glissement tel que décrit précédemment, dans lequel le système de projection est dirigé vers l'avant des roues motrices.

Le lubrifiant atteint alors directement les roues, au plus près de leur contact avec la chaussée, diminuant les pertes de lubrifiant et localisant la lubrification sur les roues, non sur la chaussée.

Le système de projection peut comprendre une sortie dirigée vers la bande de roulement du pneu, de façon à ce que la quantité de lubrifiant atteignant la bande de roulement soit maximale.

Selon une variante de réalisation, le système de projection comprend une sortie dirigée vers un premier flanc du pneu. Ainsi, lorsque le véhicule est penché sur la chaussée du côté du flanc, la surface du pneu en contact avec la chaussée étant alors ce flanc, la lubrification reste optimale.

Le système de projection peut comprendre en outre une sortie dirigée vers le deuxième flanc du pneu, de telle sorte que le véhicule peut être penché sur la chaussée des deux côté du pneu, tout en glissant.

Les roues motrices sont par exemple les roues arrière, le véhicule étant alors un véhicule à propulsion.

D'autres objets et avantages de l'invention apparaîtront à la lumière de la description faite ci-après en référence aux dessins annexés dans lesquels :
- la figure 1 est une vue en perspective d'une roue munie d'un pneu ;

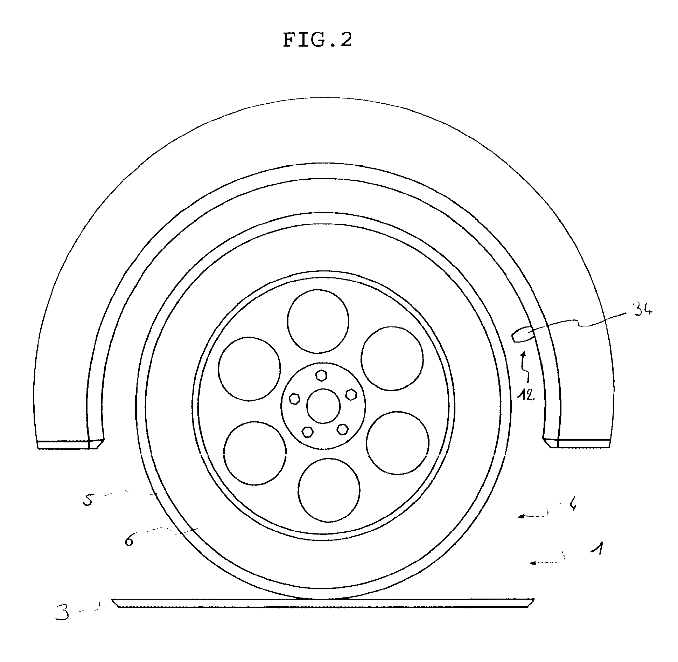

- la figure 2 est une vue de détail de l'extérieur d'un véhicule au niveau d'une roue motrice posée sur une chaussée et montée sur un essieu avec une buse dirigée vers la roue ;

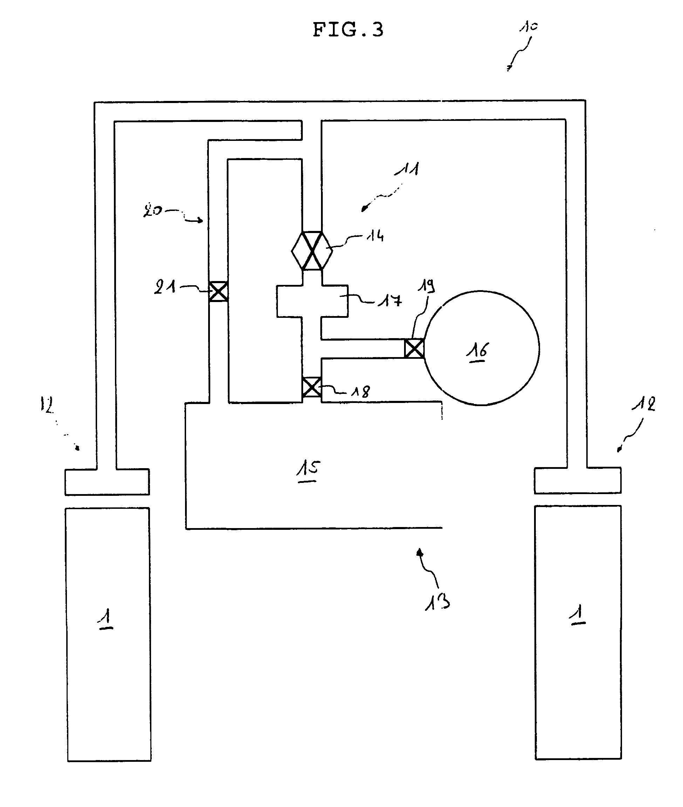

- la figure 3 est un schéma d'un dispositif pour favoriser le glissement selon un mode de réalisation ;

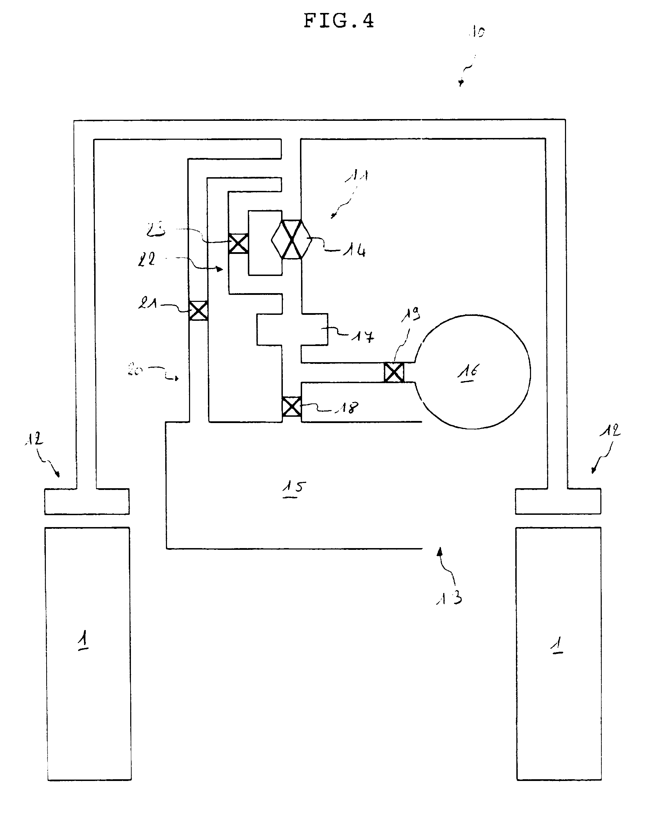

- la figure 4 est un schéma d'un dispositif pour favoriser le glissement selon un deuxième mode de réalisation ;
- la figure 5 est une vue de face d une roue posée sur la chaussée sur laquelle est schématiquement représenté un cône de jet ;

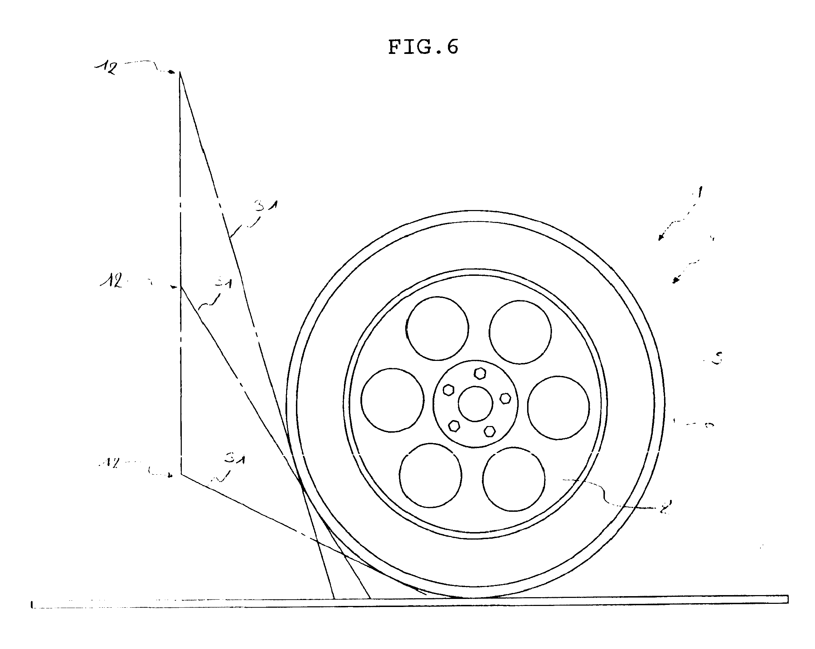

- la figure 6 est une vue de face d une roue posée sur la chaussée sur laquelle sont schématiquement représentées des tangentes à la roue selon trois différentes positions verticales d'une sortie d'un système de projection ;

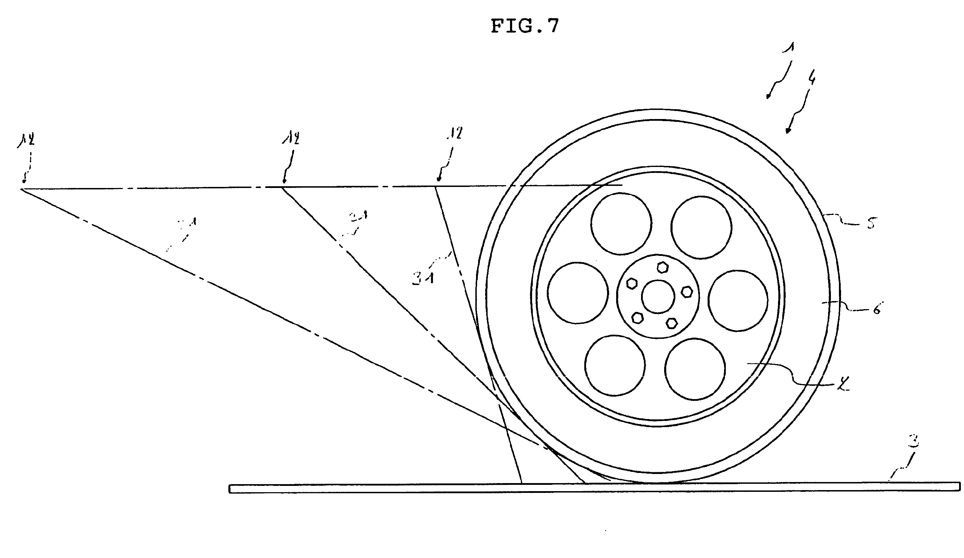

- la figure 7 est une vue de face d'une roue sur la chaussée sur laquelle sont schématiquement représentées des tangentes à la roue selon trois différentes positions horizontales d'une sortie d'un système de projection ;
- la figure 8 est une vue de détail de dessus d'une roue sur laquelle est représenté schématiquement un cône de jet ;
- la figure 9 est une vue de détail de dessus d'une roue sur laquelle sont schématiquement représenté deux cônes de jet ;
- la figure 10 est une vue de dessous d'un véhicule muni de deux roues motrices et de deux roues directrices, en condition de dérapage et positionné angulairement par rapport à une trajectoire curviligne.

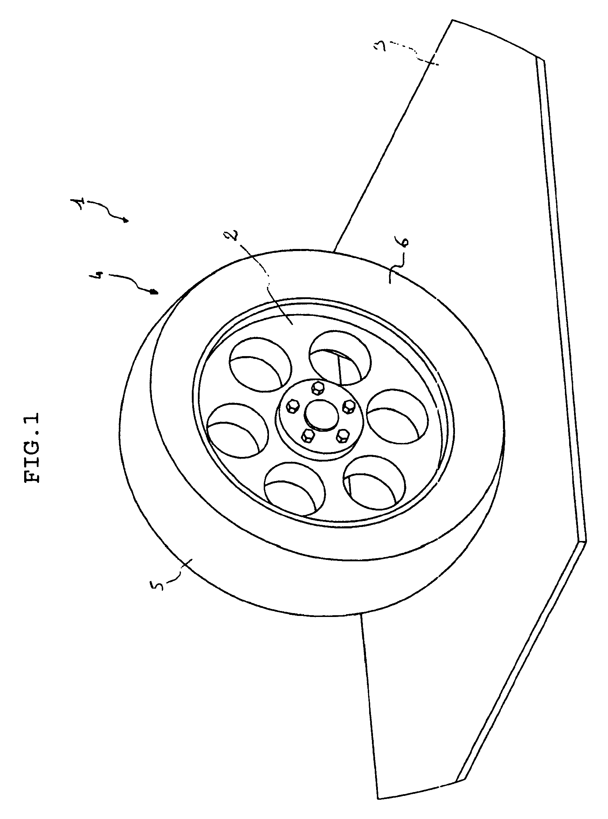

Sur la figure 1 est représentée une roue 1 comprenant une jante 2, en contact avec une chaussée 3 par l'intermédiaire d'un pneumatique 4, communément appelé pneu.

La chaussée 3 est ici la surface sur laquelle se déplace la roue 1. Elle peut être de toute nature, comme pavée, en terre battue, en gazon, en sable ou en matière synthétique. En Drift, la chaussée 3 des circuits, sur lesquels des véhicules se produisent, est traditionnellement revêtue d'une couche bitumeuse.

Généralement, la matière dans laquelle le pneu 4 est réalisé comprend un mélange de résines synthétiques, de produits vulcanisants rendant la matière plus élastique et de charges de renforcement comme le noir de carbone et la silice pour durcir la matière. Le pneu 4 comporte plusieurs couches ou nappes de feuilles de résine alternées avec des armatures textiles ou métalliques. Un exemple de pneu est décrit dans le brevet US 3,672,423.

La surface du pneu 4 comprend trois parties. Une première partie est appelée bande 5 de roulement, c'est la partie sensiblement cylindrique du pneu 4, habituellement en contact avec la chaussée 3. Les deux autres parties, appelées flanc 6 du pneu 4, sont les parties situées sur les deux faces latérales de la roue 1, de part et d'autre de la bande 5 de roulement.

Généralement, il existe une différence dans les propriétés de la matière de la bande 5 de roulement du pneu 4 et des flancs 6. En effet, la bande 5 de roulement, en contact avec la chaussée 3, doit posséder des caractéristiques spécifiques, et notamment elle doit avoir une adhérence au sol typiquement supérieure à celle des flancs 6. Ainsi, la matière sur la bande 5 de roulement est de préférence viscoélastique : elle possède un comportement intermédiaire, acceptant une déformation plus grande qu'un solide élastique (comportement visqueux) tout en reprenant ensuite un état initial (comportement élastique).

L'adhérence du pneu 4 est une caractéristique importante. En effet, le pneu 4 se doit de présenter une adhérence suffisante pour garder le contrôle du véhicule sur lequel la roue 1 est montée.

Dans certains cas où le véhicule est placé de telle sorte qu'il forme un angle avec la trajectoire tout en avançant, comme en Drift, les roues qui ne sont pas directrices se mettent à déraper, c'est-à-dire qu'elles avancent dans une direction qui ne leur est pas parallèle et subissent donc des forces de frottements. Les pneus de ces roues doivent pouvoir glisser pour maintenir la position du véhicule sans être endommagés à cause des frottements, par exemple au point de devoir être changés à chaque figure de Drift.

Les frottements sont principalement dus aux aspérités qui existent à la surface du pneu 4 et de la chaussée 3. En effet ces aspérités sont à l'origine de la rugosité des surfaces en contact, et plus la rugosité est importante, plus les surfaces sont accrochées l'une à l'autre, et donc plus le phénomène de frottement est important.

Afin de réduire ces frottements, par exemple pour réaliser des figures de Drift, le véhicule comprend un dispositif 10 pour favoriser le glissement des pneus des roues du véhicule sur la chaussée. Le dispositif comprend un système 11 de projection d'un lubrifiant.

Par lubrifiant, on désigne ici toute substance apte à diminuer le coefficient de frottement entre une surface en matière résineuse, telle que la surface d'un pneu 4, et la chaussée 3.

Le coefficient de frottement est le coefficient de proportionnalité qui existe entre la force engendrant le déplacement d'un mobile et la force de frottement qui s'oppose au déplacement. Plus le coefficient de frottement est élevé, plus la force de frottement est importante et plus il est difficile de déplacer le mobile.

Le lubrifiant se présente par exemple sous la forme d'un fluide liquide ou visqueux, tel que de l'eau ou toute autre solution aqueuse. II peut également être une substance graisseuse, comme de l'huile, ou être sous la forme d'un gaz ou encore sous la forme d'une mousse.

Cette diminution du coefficient de frottements peut être expliquée notamment par le fait qu'une couche de lubrifiant au contact entre la surface du pneu 4 et la chaussée 3 recouvre les aspérités et donc diminue les frottements dus aux rugosités.

En outre, le lubrifiant est choisi de façon à admettre une déformation visqueuse : la couche de lubrifiant, mise sous pression entre le pneu 4 et la chaussée 3, subit des contraintes de cisaillement et oppose une résistance suffisamment faible pour être aisément vaincue par le véhicule se déplaçant sur la chaussée 3.

Le système 11 de projection comprend une ou plusieurs sorties 12, lesquelles sorties 12 comportent des moyens pour projeter le lubrifiant, tels que des buses, sur les pneus 4.

Le lubrifiant est amené au système 11 de projection au moyen d'un dispositif 13 d'alimentation. Ce dispositif 13 d'alimentation comprend une pompe 14 envoyant le lubrifiant sous pression au système 11 de projection.

La pression du lubrifiant à la sortie de la pompe 14 peut être comprise entre 0,5 bar et 30 bars.

Selon un premier mode de réalisation, le dispositif 13 d'alimentation comprend un réservoir 15 contenant le lubrifiant. Le lubrifiant peut notamment être de l'eau seule, de l'eau additionnée de savon ou un fluide graisseux. La pompe 14 prélève directement le lubrifiant du réservoir 15 et l'envoie au système 11 de projection.

Selon un deuxième mode de réalisation, le dispositif d'alimentation comprend plusieurs réservoirs, chacun contenant un ou plusieurs composants du lubrifiant. La pompe 14 est reliée à chacun des réservoirs et prélève conjointement leur contenu de sorte que leur mélange résulte en un lubrifiant. Le mélange peut être réalisé avant la pompe 14 ou après. Par exemple, le dispositif d'alimentation peut comprendre un premier réservoir 15 d'eau et un deuxième réservoir 16 d'additif optimisant la baisse du coefficient de frottement, tel qu'un tensio-actif améliorant la mouillabilité de la surface sur laquelle il est projeté. Selon un mode de réalisation, l'additif est un savon.

La séparation des composants du lubrifiant dans plusieurs réservoirs 15 et 16 peut permettre de résoudre des problèmes de stockage. En effet, dans le cas où le lubrifiant utilisé est de l'eau savonneuse, si celle-ci est conservé telle qu'elle dans un réservoir, les mouvements du véhicule, notamment en drift, peuvent occasionner la création de mousse dans ce réservoir, et la pompe peut alors avoir des difficultés à prélever cette mousse. C'est pourquoi il est préférable de conserver l'eau et le savon dans deux réservoirs séparés, et de les mélanger juste avant de les envoyer aux roues

Le dispositif 13 d'alimentation comprend en outre un réservoir 17 de déjaugeage placé à l'entrée de la pompe 14. De préférence, le réservoir 17 de déjaugeage est placé entre le ou les réservoirs 15 et 16 et la pompe 14. Dans le cas où on a plusieurs réservoirs, le mélange de leur contenu est réalisé dans le réservoir 17 de déjaugeage.

Afin de permettre le démontage, le réservoir de lubrifiant ou les réservoirs 15 et 16 sont munis d'une vanne 18 et 19. Dans le cas de plusieurs réservoirs, une jonction de tous les réservoirs peut être réalisée au moyen de canalisations et une vanne unique peut être placée après la jonction afin de démonter tous les réservoirs simultanément. Un circuit 20 de vidange peut relier directement un réservoir 15 à la sortie de la pompe 14. Le circuit 20 de vidange comporte une vanne 21, permettant ainsi de réaliser la vidange du réservoir 15 tout en conservant le montage du dispositif 10.

En variante, un circuit 22 de retour relie l'entrée de la pompe 14 à sa sortie. Lorsque le réservoir 17 de déjaugeage est présent, et notamment dans le cas où on a plusieurs réservoirs, une extrémité du circuit 22 de retour sera fixée entre le réservoir 17 de déjaugeage et l'entrée de la pompe 14, et la deuxième extrémité sera fixée entre la sortie de la pompe 14 et la connexion du circuit 20 de vidange.

Ainsi, dans le cas où le débit en sortie de la pompe 14 est supérieur au débit souhaité pour le système 11 de projection, le circuit 22 de retour est ouvert de manière à dévier une certaine quantité de lubrifiant à la sortie de la pompe 14 et à la ramener à l'entrée de la pompe 14. Il est ainsi possible d'obtenir dans le système 11 de projection le débit tel que souhaité sans forcer la pompe 14. Par exemple, dans le cas où le débit souhaité est de 3 L.min⁻¹ et que la pompe a un débit minimal de 12 L.min⁻¹, le c rcuit de retour dérive le surplus à l'entrée de la pompe.

Le débit fourni au système de projection est compris entre 0,1 et 20 L.min⁻¹, et de préférence entre 2 et 4 L.min⁻¹. Selon un mode de réalisation, le débit est d'environ 3 L.min⁻¹.

Le dispositif 10 pour favoriser le glissement peut comprendre un mécanisme de réglage du dispositif 13 d'alimentation permettant d'ajuster le débit de lubrifiant projeté à la ou les sorties 12 du système 11 de projection. Le mécanisme de réglage est par exemple relié à la pompe 14 afin de régler son débit et est relié aux vannes 18 et 19 des réservoirs 15 et 16, qui sont alors des vannes ajustables, pour régler les proportions des prélèvements. Une vanne 23 ajustable sur le circuit 22 de retour et reliée au mécanisme de réglage peut également permettre de régler le débit à la sortie de la pompe 14.

La pompe 14 et le mécanisme 23 de réglage sont alimentés par exemple par une batterie, qui peut être celle du véhicule.

Le système 11 de projection envoie un jet 30 du lubrifiant sur une roue 1, plus précisément sur le pneu 4 de la roue 1, et avantageusement sur une roue motrice. Afin d'obtenir une lubrification optimale entre la roue 1 la chaussée 3, le jet 30 est dirigé vers l'avant de la roue 1, au plus près de la chaussée 3, de sorte que la portion de la roue 1 qui reçoit le jet 30 effectue une rotation inférieure à 180° avant d'entrer en contact avec la chaussée 3.

L'explication simplifiée qui suit est donnée en vue d'assurer une bonne compréhension du fonctionnement global du dispositif 10 et n'est en rien limitative.

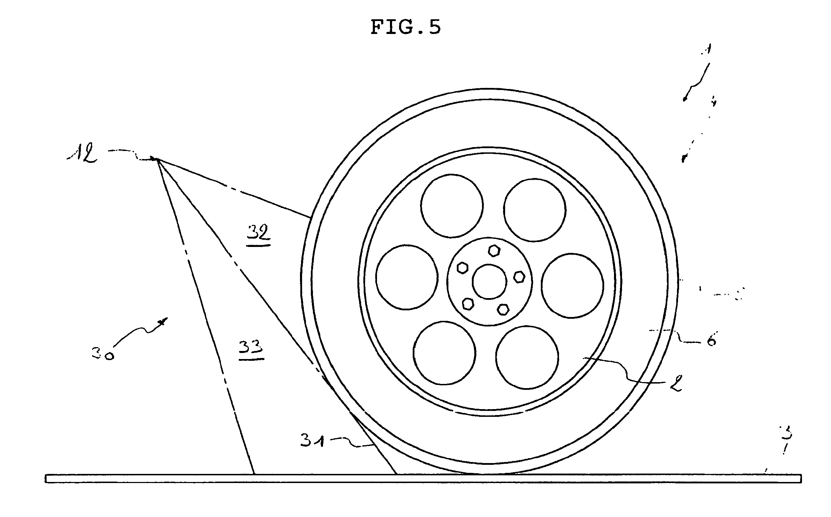

Afin de décrire des caractéristiques du jet 30, il est supposé que le jet 30 forme un cône, s'étendant à partir d'une sortie 12 du système 11 de projection vers la roue 1. Sur la figure 5, sont modélisés une roue 1 vue de face sur une chaussée ainsi que le cône du jet 30 vue en coupe latérale. Afin d'expliquer au mieux le positionnement du système 11 de projection à la roue 1, on suppose que la vitesse de la roue 1 est négligeable par rapport au débit à la sortie 12 du système 11 de projection.

Dès lors, en un point donné sur la bande 5 de roulement, sensiblement cylindrique, de la roue 1, la droite 31 issue de la sortie 12 du système 11 de projection et tangente en ce point sépare le jet 30 en deux zones. Une première zone 32 supérieure se trouvant au dessus de la tangente 31 est la portion du jet 30 qui atteint la roue 1. La deuxième zone 33 inférieure, située sous la tangente 31, est la portion du jet 30 qui ne touchera pas la roue 1 et qui déposera du lubrifiant sur la chaussée 3. La zone 33 inférieure doit être la plus petite possible. En effet, il n'est pas souhaitable de déposer du lubrifiant sur une portion de la chaussée 3 à cause de la perte de contrôle que pourraient subir les véhicules suivants en passant sur cette portion lubrifiée de la chaussée 3. De plus, la roue 1 ne passera pas nécessairement exactement sur la portion lubrifiée de la chaussée 3, ce qui occasionne des pertes de lubrifiant. La zone 32 supérieure doit être ajustée de façon à déposer suffisamment de lubrifiant sur la roue 1 pour optimiser la lubrification lors du contact avec la chaussée 3. En effet, plus le débit en sortie 12 du système 11 de projection est faible, plus il faut de temps pour que le lubrifiant recouvre suffisamment la portion de la roue 1 , et donc plus la zone 32 supérieure doit être grande.

On comprend ainsi que la tangente 31 modélise la droite sur la surface du cône en regard avec la chaussée 3, du cône de jet 30 vu en coupe latérale, dans le cas où la zone 33 inférieure est inexistante.

L'angle entre la tangente 31 et la chaussée 3 représente ici l'inclinaison du jet 30 pour laquelle il n'y a pas de dépôt de lubrifiant sur la chaussée 3.

L'inclinaison du jet 30 dépend de la position du système 11 de projection par rapport à la chaussée 3 et par rapport à la roue 1. En effet, plus la distance entre la sortie 12 du système 11 de projection et la chaussée 3 est grande, plus l'inclinaison est importante. De même, plus la distance entre la sortie 12 du système 11 de projection et la roue 1 est grande, plus l'inclinaison est grande.

Le système 11 de projection comprend de préférence plusieurs sorties 12 placées à l'avant de chaque roue 1 motrice.

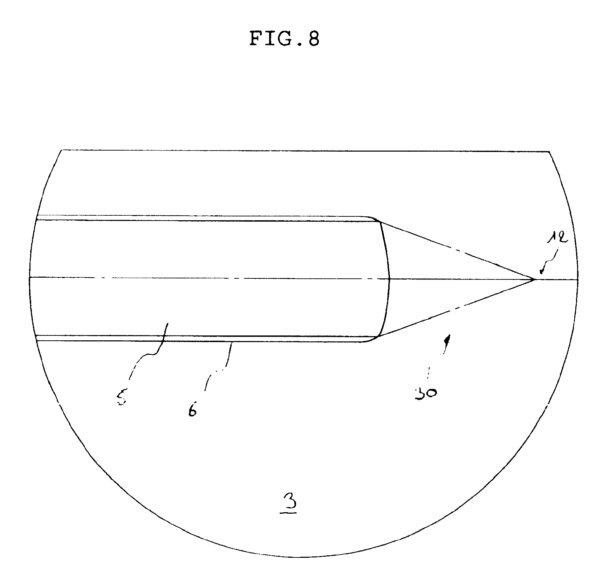

Selon un premier mode de réalisation, une seule sortie 12 est placée devant une roue 1. En vue de dessus de la roue 1 (figure 8), l'angle d'ouverture du cône de jet 30 doit être tel que :
- le jet 30 recouvre le maximum de la largeur de la bande de roulement de la roue 1 ;
- tout le jet 30 atteint la roue 1.

Ainsi l'angle d'ouverture du jet 30 dépend notamment à la fois de la distance entre la sortie 12 du système 11 de projection et la roue 1 , de la distance entre la sortie 12 et la chaussée 3 et de la largeur de la bande 5 de roulement du pneu 4 la roue 1.

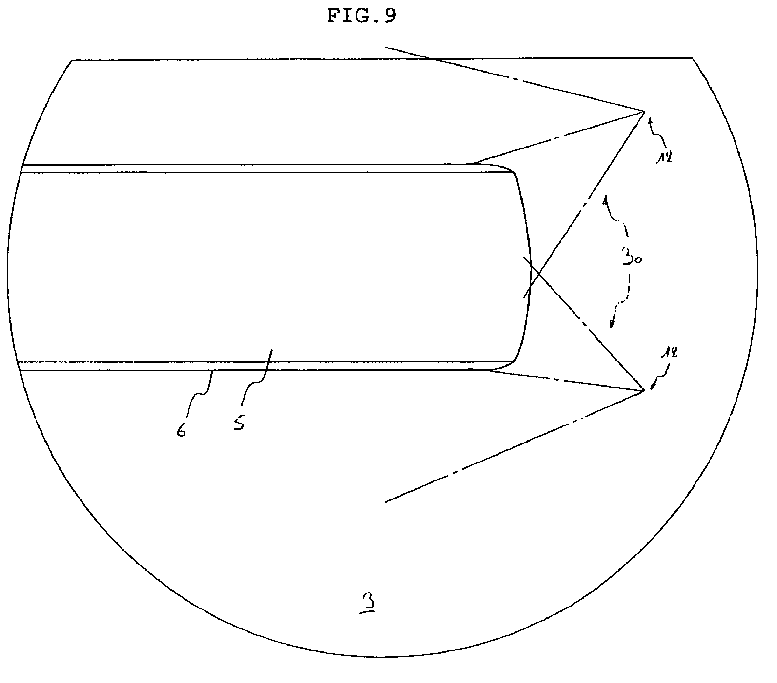

Selon un deuxième mode de réalisation, deux sorties 12 sont placées de part et d'autre de chaque roue 1 motrice, de telle sorte que les flancs 6 du pneu 4 des roues 1 sont également lubrifiés. Les deux sorties 12 sont placées de préférence symétriquement par rapport à une ligne médiane de la roue 1 sensiblement parallèle aux flancs 6 et à la chaussée 3. La distance entre ces sorties 12 et la chaussée 3 et la distance entre ces sorties 12 et la roue 1 sont choisies comme précédemment. En vue de dessus de la roue 1 (figure 9), la distance entre les deux sorties 12 est de préférence supérieure à la largeur de la bande 5 de roulement pour que le jet 30 d'une sortie 12 atteigne un flanc 6. L'angle du cône de chaque sortie 12 doit être tel que :
- le jet 30 atteint au moins le milieu de la bande 5 de roulement, et de préférence au-delà, de façon à ce que les jets 30 des deux sorties 12 se croisent sur le milieu de la bande 5 de roulement ;
- tout le jet 30 atteint la roue 1, c'est-à-dire que l'angle du cône 30 est choisi de façon à ce que le moins de lubrifiant possible soit perdu en n'atteignant pas un flanc 6.

Ainsi, l'angle d'un jet 30 dépend notamment de la surface des flancs 6, de la largeur de la bande 5 de roulement, de la distance entre les sorties 12 du système 11 de projection à l'avant de la roue 1, de la distance entre les sorties 12 et la chaussée 3 et de la distance entre la roue 1 et les sorties 12.

Dès lors, lorsqu'une figure de Drift requière que le véhicule prenne une position dans laquelle les flancs 6 des pneus 4 sont en contact avec la chaussée 3, il est possible de lubrifier ce contact et de favoriser le glissement dans cette position.

Une sortie 12 du système 11 de projection comprend par exemple une buse 34, orientée de façon à obtenir un cône de jet 30 optimal selon la description des modes de réalisation qui précèdent. Les sorties 12 sont placée à l'avant de chaque roue motrice du véhicule. Le châssis du véhicule est par exemple percé à une distance de la chaussée 3 choisie en fonction de l'inclinaison désirée du jet 30. Puis une sortie 12 du système 11 de projection est passée dans le perçage, la buse 34 étant disposée à une distance de la roue 1 également en fonction de l'inclinaison désirée du jet 30.

En Drift, les véhicules utilisés sont majoritairement des véhicules à propulsion, une sortie 12 du système 11 de projection sera donc dirigée vers une roue arrière.

Un véhicule 40, comprenant un train de roues 1 motrices et un train de roues 41 directrices, et équipé du dispositif 10 pour favoriser le glissement tel que décrit, pourra alors déraper sur les pneus 4 des roues, de préférence les roues 1 motrices, lubrifiées et se placer angulairement par rapport à une trajectoire T plus facilement tout en se déplaçant, par exemple pour effectuer des figures de Drift (figure 10).

Selon un mode de réalisation préféré, In dispositif 10 est placé dans le véhicule 40 avec le réservoir de lubrifiant ou les réservoirs 15 et 16 de composants du lubrifiant placés dans le coffre.

Un système 41 de commande relié au dispositif 10 pour favoriser le glissement est placé par exemple sur la console de commande du véhicule 40. Ce système 41 permet de faire fonctionner le dispositif 10 pour favoriser le glissement et d'agir sur le mécanisme 23 de réglage du dispositif d'alimentation : le pilote peut choisir les valeurs de débit et des quantités des composants de lubrifiant, ainsi que les roues dont le pneu sera lubrifié. Le système 41 de commande peut être placé sur le tableau de bord du véhicule 40 à côté du volant, ou encore sur le frein à main, par exemple sous la forme d'un interrupteur actionné manuellement par le pilote selon ses sensations. Le mécanisme 41 peut également être relié à un module informatique, lequel détecte la position angulaire du véhicule 40 et actionne automatiquement le dispositif 10 pour favoriser le glissement.

Le véhicule 40 ainsi équipé peut avancer avec une position dans laquelle il forme un angle avec la trajectoire, en glissant sur les roues, et préférentiellement sur les roues 1 motrices, sur la bande 5 de roulement et sur les flancs 6 des pneus 4. Pour cela, lorsqu'un pilote du véhicule 40 désire se positionner angulairement, par exemple pour effectuer une figure de Drift, il accède au système de commande 41 , qui met en route la pompe 14. A l'aide du mécanisme 23 de réglage, il ajuste les valeurs du débit, de pression et des proportions des composants du lubrifiant. Cet ajustement peut être réalisé avant d'effectuer la figure ou pendant. Les quantités de composants choisies sont prélevées des réservoirs 15 et 16. Les produits sont mélangés pour former le lubrifiant, et sont envoyés sous pression vers le système 11 de projection qui envoie à son tour le lubrifiant sous forme de jet vers l'avant des roues 1 motrices.

Dans le cas où le véhicule 40 est dans une position telle que son inclinaison rend le prélèvement du lubrifiant dans son réservoir impossible, une réserve du lubrifiant est disponible dans le réservoir 17 de déjaugeage, qui joue le rôle de réservoir de secours, afin d'être toujours apte à projeter du lubrifiant.

Dans le cas où le débit souhaité est inférieur au débit de la pompe 14, le circuit 22 de retour est ouvert.

Le dispositif 10 pour favoriser le glissement permet à tout véhicule 40 qui en est équipé de lubrifier ses roues, ce qui facilite le glissement des roues en dérapage en diminuant les frottements, et donc aide à maintenir une position angulaire par rapport à la trajectoire, par exemple comme en Drift.

De plus, le dispositif 10 permet de localiser la lubrification sur les roues 1 du véhicule 40, ce qui permet de ne pas modifier les propriétés de la chaussée 3 pour les véhicules suivants et de ne pas occasionner de perte de lubrifiant.

De préférence, les roues 1 lubrifiées sont les roues motrices, par exemple situées sur le train arrière du véhicule 40. Les roues avant directrices conservent alors leur adhérence, facilitant le contrôle du véhicule, notamment pour des pilotes peu expérimentés : au contraire d'une piste sur laquelle l'ensemble de la chaussée 3 a été mouillé, le contact entre les roues 1 directrices et la chaussée 3 n'est pas lubrifié, ce qui permet de conserver le contrôle de la trajectoire du véhicule 40.

Par ailleurs, il est possible de conserver des pneus 4 ayant une grande adhérence sur toutes les roues du véhicule, l'adhérence étant diminuée lors de l'actionnement du dispositif en cas de besoin sur les roues choisies.

Enfin, le système 41 de commande permet au pilote de régler lui-même la lubrification qu'il souhaite en fonction de différentes facteurs tels que la figure de Drift à réaliser, les propriétés de la chaussée 3, celles des pneus 4, et les sensations du pilote.

Ainsi, par exemple en Drift, le véhicule 40 restera facile à contrôler à la fois en dehors et pendant les figures de Drift, en conservant des pneus 4 à grande adhérence, une chaussée 3 sèche et en choisissant le niveau et l'instant de la perte d'adhérence.

D'autre part, le jet 30 de lubrifiant est généralement à température ambiante ou peut être refroidi, ce qui permet de refroidir avantageusement les pneus 4 fortement échauffés lors du glissement.

## Revendications

1. Dispositif **(10),** destiné à être embarqué dans un véhicule **(40),** pour favoriser le glissement d'au moins une roue **(1)** du véhicule **(40)** par rapport à une chaussée **(3),** qui comprend :
- un système **(11)** de projection d'un lubrifiant sur la roue **(1)** de sorte à en diminuer le coefficient de frottement par rapport à la chaussée **(3),**
- un dispositif **(13)** d'alimentation en lubrifiant du système **(11)** de projection.

2. Dispositif **(10)** selon la revendication 1, dans lequel le dispositif **(13)** d'alimentation comprend un réservoir **(15)** contenant le lubrifiant, et une pompe **(14)** pour y prélever le lubrifiant et l'envoyer sous pression au système **(11)** de projection.

3. Dispositif **(10)** selon la revendication 1, dans lequel le dispositif **(13)** d'alimentation comprend plusieurs réservoirs **(15, 16)** contenant les composants du lubrifiant, et une pompe **(14)** pour y prélever les composants et les envoyer sous pression au système **(11)** de projection.

4. Dispositif **(10)** selon la revendication 3, dans lequel un réservoir **(16)** contient un tensioactif.

5. Dispositif **(10)** selon la revendication 4, dans lequel le tensioactif est du savon.

6. Dispositif **(10)** selon l'une des revendications 1 à 5, dans lequel le dispositif **(13)** d'alimentation comprend un réservoir **(17)** de déjaugeage.

7. Dispositif **(10)** selon l'une des revendications 1 à 6, comprenant un circuit **(20)** de vidange du dispositif **(13)** d'alimentation.

8. Dispositif **(10)** selon l'une des revendications 1 à 7, dans lequel le dispositif **(13)** d'alimentation comprend un circuit **(22)** de retour entre le système **(11)** de projection et le dispositif **(13)** d'alimentation.

9. Dispositif **(10)** selon l'une des revendications 1 à 8, comprenant un mécanisme de réglage du dispositif **(13)** d'alimentation.

10. Dispositif **(10)** selon l'une des revendications 1 à 9, comprenant un système de commande dudit dispositif **(10).**

11. Véhicule **(40)** comprenant un train de roues **(1)** motrices et un train de roues directrices, les roues **(1)** motrices étant habillées de pneu **(4),** le véhicule **(40)** comportant en outre un dispositif **(10)** pour favoriser le glissement selon l'une des revendications 1 à 10, dans lequel le système **(11)** de projection est dirigé vers l'avant des roues **(1)** motrices.

12. Véhicule **(40)** selon la revendication 11, dans lequel le système **(11)** de projection comprend une sortie **(12)** dirigée vers la bande **(5)** de roulement du pneu **(4)** des roues **(1)** motrices.

13. Véhicule **(40)** selon la revendication 11 ou 12, dans lequel le système **(11)** de projection comprend une sortie **(12)** dirigée vers un premier flanc **(6)** du pneu **(4)** des roues **(1)** motrices.

14. Véhicule **(40)** selon la revendication 13, dans lequel le système **(11)** de projection comprend une sortie **(12)** dirigée vers le deuxième flanc **(6)** du pneu **(4)** des roues **(1)** motrices.

15. Véhicule **(40)** selon l'une des revendications 11 à 14, dans lequel les roues **(1)** motrices sont les roues arrière.
